# EUROPEAN PATENT APPLICATION

(11) **EP 4 687 098 A1**
(43) Date of publication of application: **04.02.2026**
(21) Application number: 24192012.3
(22) Date of filing: 31.07.2024
(51) Int. Cl.: G06T 7/11, G06T 5/60, G06T 5/77

(54) **METHOD AND SYSTEM FOR SEGMENTING AN ANATOMICAL STRUCTURE IN A MEDICAL IMAGE**

(71) Applicant: Koninklijke Philips N.V., 5656 AG Eindhoven (NL)
(72) Inventor: GROTH, Alexandra, Eindhoven (NL); WAECHTER-STEHLE, Irina, Eindhoven (NL)
(74) Representative: Philips Intellectual Property & Standards

(57) **Abstract**

A computer-implemented method (300) and a processing system (800) for segmenting an anatomical structure in a medical image (304, 400) are provided. A medical image having an extent that defines a first field of view 405, FOV, and comprising a first portion (430) of an anatomical structure of a subject is received. Based on the received medical image (304, 400), a target region (440) in relation with the first portion (430) of the anatomical structure is determined, wherein the target region is located outside the first FOV (405) and is a region expected to comprise a second portion of the anatomical structure. An inpainting function (500) is applied to the received medical image (304, 400) to generate a modified medical image (335, 410) having an extent that defines a second FOV (415), wherein the second FOV includes, and is larger than, the first FOV (405) and comprises the target region (440). The anatomical structure is then segmented based on the modified medical image (335, 410).

## Description

### FIELD OF THE INVENTION

The invention relates to the field of medical imaging and, more particularly, to the field of segmentation of anatomical structures in medical images.

### BACKGROUND OF THE INVENTION

Medical imaging is widely use in the field of medical diagnosis and treatment. Measurements and other quantifications derived from medical images obtained using an image acquisition system are typically used to assess the dimensions and/or the function of a human's or animal's anatomical structure.

In contrast to other medical imaging modalities, ultrasound imaging is easy-to-use and safe, due to the fact that no radiation is involved, which makes ultrasound imaging very well-suited for a wide range of areas of the body. For example, ultrasound imaging is particularly popular in obstetrics for monitoring the development of a fetus during pregnancy. Moreover, this imaging modality is also capable of real-time image acquisition, making it extremely valuable for applications involving the visualization and assessment of anatomical structures that undergo cyclical movement patterns and/or change their shape over a temporal cycle, such as in cardiology for visualizing a heart chamber or a cardiac valve.

Segmentation is frequently used to automate the delineation of relevant anatomical sites or features of an anatomical structure contained in a medical image. After image segmentation, the resulting delineations enable a more rapid assessment of medical images by clinicians (i.e., enabling quicker diagnosis or treatment decisions). Different segmentation algorithms may be employed for segmenting different anatomical structures in medical images, e.g., heart, lungs, digestive tract, neck, groin or any other structure.

Segmentation algorithms typically used in the field of medical imaging include model-based segmentation and deep learning-based segmentation algorithms. Model-based segmentation algorithms, such as the one described in detail in "Automatic Model-Based Segmentation of the Heart in CT Images" by O. Ecabert et al., IEEE Transactions on Medical Imaging, 2008, 27, pp. 1189-1201, use pre-determined models, for instance of a particular anatomical structure, which model typical shapes, sizes, textures or other graphical features characteristic of certain anatomical sites or features. These model properties can be imposed as constraints on the segmentation, e.g. wherein the model is fitted to the imaging data, to thereby enable segmentation of anatomical features.

Despite improvements, image segmentation is frequently unreliable. For example, if the medical image has an extent that defines a relatively small field of view (FOV), which is often the case in three-dimensional (3D) real-time medical imaging using, for example, ultrasound, the automatic delineation of anatomical features can frequently fail. Given that a reduced FOV often leads to an incomplete visualization of the anatomical structure, the algorithm may misinterpret the available content of the image and/or the image may lack sufficient signal content in certain areas to enable accurate delineation of boundaries and lines. For example, model-based segmentation relies on assessing image features such as gradients or textures. Missing signal data in certain anatomical regions due to a reduced FOV of the medical image can lead to the failure of the segmentation procedure, and result in inaccurate delineation of image features and, therefore, unreliable segmentation results.

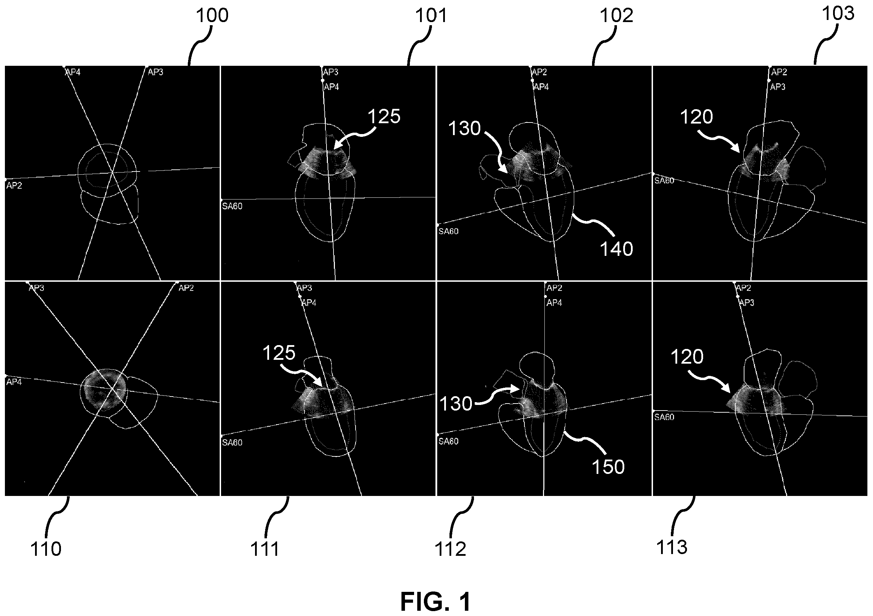

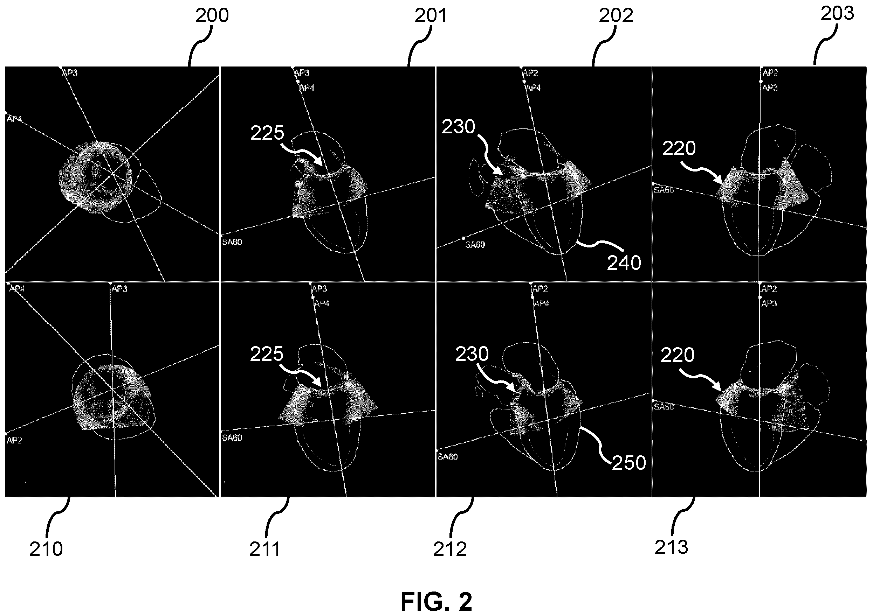

The problem of segmentation failure due to a reduced FOV of the medical image is illustrated in Figs. 1 and 2, in which two different examples of a 3D ultrasound cardiac image are depicted, together with their respective segmentation results obtained using a model-based segmentation algorithm. Due to their reduced FOV, only a portion of the heart 120, 220 is contained in the medical images and, particularly, the mitral valve 125, 225 is partly cut out and surrounding anatomical features, such as the aortic valve 130, 230, are only partially imaged. In each figure, the upper row depicts four standard cardiac views, namely, the parasternal short axis (SA), the apical 2-chamber (AP2), the apical 3-chamber (AP3) and the apical 4-chamber (AP4) views (respectively labelled 100-103 in Fig. 1 and 200-203 in Fig. 2), together with the delineation 140, 240 of the heart chambers and cardiac valves obtained using the model-based segmentation algorithm provided as an overlay; while the bottom row depicts the same four standard cardiac views of the medical image (respectively labelled 110-113 in Fig. 1 and 210-213 in Fig. 2), together with a "ground truth" delineation 150, 250 of the heart chambers and cardiac valves.

As the FOV of medical image is reduced, the segmentation procedure becomes more prone to error, not only because information is lost due to non-imaged anatomical features of the anatomical structure, but also because the anatomical features that are within the FOV become less distinctive. As a consequence it becomes more difficult for the model-based segmentation algorithm to determine an initial placement of a heart model onto the portion of the heart contained in the medical image, which results in a translation (or shift) error and/or a rotation error, which the algorithm cannot subsequently correct during the adaptation of the heart model to the actual geometry of the heart.

Fig. 1 shows an example of shift error in the segmentation results. In particular, due to the fact that the aortic valve 130 is only partially imaged, and that the cardiac apex is missing, the delineated mitral valve of the segmentation results 140 is shifted downwards with respect to the ground truth delineation 150 of the mitral valve, as it can be readily observed in the AP2, AP3 and AP4 views 101-103 of Fig. 1 in comparison with views 111-113.

On the other hand, Fig. 2 shows an example of rotation error in the segmentation results. Once again, the fact that the aortic valve 230 is only partially imaged leads to the segmentation results 240 being rotated relative to the plane of the mitral valve 225 in comparison with the ground truth delineation 250, as illustrated in the AP2, AP3 and AP4 views 201-203 of Fig. 2 in comparison with views 211-213.

Failure of the segmentation procedure may be further aggravated if, in addition to having a reduced FOV, the medical image has also poor image quality and/or includes anatomical anomalies.

In the field of image processing the term inpainting denotes a process where damaged or missing regions of an image are filled in to create a complete image (i.e., an image without the damaged or missing regions). The inpainting of images can be done manually or automatically, in particular, by image processing algorithms. Typically, automatic inpainting can utilize information within the images outside the damaged or missing regions to infer the missing content of the damaged or missing regions of the image.

Inpainting algorithms can be based on structural and/or textural aspects of images. Furthermore, inpainting algorithms can be classical or learning-based inpainting algorithms. For example, conference proceedings paper "Generative Image Inpainting with Contextual Attention", by J. Yu, et al., 2018 IEEE/CVF Conference on Computer Vision and Pattern Recognition (CVPR), Salt Lake City, UT, USA, 2018 pp. 5505-5514, arXiv: 1801.07892, discloses an inpainting algorithm based on a fully convolutional neural network which can process images with multiple holes at arbitrary locations and with variable sizes.

In particular, inpainting has also been used for medical images, as for example, in the document "AIVUS: Guidewire Artifacts Inpainting for Intravascular Ultrasound Imaging With United Spatiotemporal Aggregation Learning", by B. Li et al., IEEE Transactions on Computational Imaging, vol. 8, pp. 679-692, 2022, which proposes the use of a deep learning-based inpainting algorithm to repair guidewire artifacts contained in intravascular ultrasound images. Similarly, WO 2022/133806 A1 discloses an inpainting method for repairing a volumetric ultrasound image of a fetal face by filling in parts of the fetal face which are missing in the volumetric image due to occlusion, or which have poor quality.

US 11,996,197 B2 proposes applying a trained inpainting function to chest X-ray images to inpaint abnormal structures, e.g., lung nodules, in the images.

There is therefore an ongoing desire to make the segmentation of anatomical structures in medical images less prone to failure due to a reduced FOV of the medical images.

### SUMMARY OF THE INVENTION

It is therefore an object of the present invention to provide a computer-implemented method for segmenting an anatomical structure in a medical image, in which the anatomical structure can be segmented more reliably even if the medical image has a limited FOV. It is also an object of the present invention to provide a respective computer program product and a processing system for segmenting an anatomical structure in a medical image.

The above objects are solved by the independent claims. Advantageous embodiments are provided in the dependent claims.

According to examples in accordance with an aspect of the present invention, there is provided a computer-implemented method for segmenting an anatomical structure in a medical image.

The computer-implemented method comprises: receiving a medical image, the medical image having an extent that defines a first field of view, FOV, wherein the medical image comprises a first portion of an anatomical structure of a subject; determining, based on the received medical image, a target region in relation with the first portion of the anatomical structure, the target region being located outside the first FOV, wherein the target region is a region expected to comprise a second portion of the anatomical structure; applying an inpainting function to the received medical image to generate a modified medical image, wherein the modified medical image has an extent that defines a second FOV, wherein the second FOV includes, and is larger than, the first FOV and comprises the target region; and segmenting the anatomical structure based on the modified medical image.

A medical image with limited FOV often leads to an incomplete visualization of an anatomical structure of interest contained in the medical image, which in turn poses a considerable challenge for subsequent image processing steps, such as, in particular, segmentation of the anatomical structure. The present invention is, therefore, based on the insight that segmentation of the anatomical structure partially contained in the received image having a first (relatively smaller) FOV can be made more reliable by augmenting the amount of imaging data associated with the anatomical structure and, in particular, by enlarging the extent of the received medical image to define a second (relative larger) FOV so as to capture one or more additional portions of the anatomical structure.

In accordance with the invention, an inpainting function is advantageously applied to the received medical image to synthesize additional image data associated with the anatomical structure in, at least, a target region located outside the first FOV in which a second portion of the anatomical structure is expected to be comprised. In this manner, it is possible to generate a modified medical image having an enlarged FOV which provides more anatomical context to a segmentation algorithm to more reliably segment the anatomical structure on the basis of the modified medical image.

That is, while inpainting functions have typically been applied to medical images with the purpose of improving the information contained within their FOV, such as to remove artifacts contained in the medical images, the inventors have realized that an inpainting function can be advantageously used in a different way, namely, to synthesize additional image data associated with an anatomical structure in a region outside the FOV of a medical image, hence, effectively enlarging its FOV, in order to stabilize a segmentation algorithm, so that the anatomical structure can be more reliably segmented.

The received medical image may advantageously be an X-ray image, a computed tomography (CT) image, a magnetic resonance (MR) image, a positron emission tomography (PET) image, a single-photon emission computed tomography (SPECT) image, or an ultrasound image.

The received medical image may be a two dimensional (2D) image or a three dimensional (3D) image. In some examples, the received medical image may be a bi-plane image (also referred to as an X-plane image) comprising two 2D medical images intersecting each other along an axis, preferably, at an angle of about 90°. In particular; in the case of ultrasound imaging, said axis of intersection is typically perpendicular to the plane of the ultrasound transducer elements.

The received medical image may also be a temporal sequence of 2D frames, i.e., 2D+t medical image, or a temporal sequence of 3D frames, i.e., 3D+t medical image. In these cases, the method may process, either sequentially or in parallel, each frame of the received medical image independently. Alternatively, the inpainting function may be adapted to jointly process at least a subset of the temporal sequence (or even the entire temporal sequence) of frames of the received medical image to generate a corresponding temporal sequence of modified frames. In this way, not only spatial anatomical context but also temporal anatomical context can be advantageously used by the inpainting function to infer additional image data more accurately.

In a preferred embodiment, the received medical image is a 3D ultrasound image. This is a case in which the present invention is particularly advantageous, because the need for 3D real-time ultrasound imaging, for example, in cardiac imaging, makes it necessary to severely reduce the FOV of the acquired medical images to such degree that typically only a portion of the cardiac structure of interest is visible.

The anatomical structure may preferably comprise a heart or a portion thereof, such as, a heart chamber (e.g., an atrium or a ventricle) or a cardiac valve (e.g., an aortic, mitral, pulmonary or tricuspid valve). In some other embodiments, the anatomical structure may comprise a blood vessel, a lung, a fetus or a portion of any of the foregoing.

The target region is a region which is located outside the first FOV and which is expected to comprise a second portion of the anatomical structure.

In a preferred embodiment, the step of determining the target region may be partially or fully automated. In such case, the method may advantageously comprise: identifying a class of anatomical structures out of a plurality of classes of anatomical structures based on the first portion of the anatomical structure; and determining the target region based on a location and/or orientation of said first portion within the first FOV and the identified class of anatomical structures.

Determining the target region based on the location and/or orientation of the first portion within the first FOV and the identified class of anatomical structures may preferably comprise a trained algorithm, such as artificial intelligence algorithm, or an algorithm that uses anatomical knowledge of the anatomical structure. The plurality of classes of anatomical structures may comprise a heart, a blood vessel, a lung and/or a fetus, among others.

In this embodiment, the method may additionally comprise receiving a user input on a user interface, the user input being indicative of an expected location of the second portion of the anatomical structure. Then, determining the target region may be further based on the user input. In this partially-automated case, the user may simply provide a coarse location of where he or she believes that the second portion of the anatomical structure is located, hence, providing the user with a way to influence the outcome of the algorithm with a reduced burden for the user.

Alternatively, the step of determining the target region may comprise receiving user input on a user interface, the user input comprising a delineation of the target region. In this way, the user has full control on determining in which region the inpainting function is to be applied.

In accordance with the invention, the second FOV is larger than the first FOV, includes the first FOV, and also comprises the target region. That is, the first FOV and the target region are contained within the second FOV.

In the context of the present disclosure, the FOV of a medical image preferably refers to extent or size of the medical image, which can be specified in terms of dimensions (e.g., in cm or mm) as a height and a length (and a depth in the case of 3D medical images) or in terms of a number of pixels or voxels arranged in rows and columns (and sections in the case of voxels).

In some embodiments, the second FOV is equal to the sum of the first FOV and the extent of the target region. In such embodiments, the inpainting function synthesizes additional image data outside the first FOV only for pixels or voxels located in the target region. That is, the modified medical image comprises pixels or voxels only in a region corresponding to the first FOV and the extent of the target region. In this way, the number of pixels or voxels that need to be synthesized by the inpainting function is minimized, advantageously reducing the overall computational complexity. Such embodiments may be preferred when real-time processing of the received images is needed, such as, for example, when the received images form a temporal sequence of an anatomical structure that undergoes a cyclical movement pattern and/or changes its shape over a temporal cycle.

However, in some other embodiments, the second FOV is larger than the sum of the first FOV and the extent of the target region. In such embodiments, the second FOV may preferably have a predetermined shape and/or aspect ratio. That is, the modified medical image comprises pixels or voxels not only in the region corresponding to the first FOV and the extent of the target region, but also outside said region so as to obtain a second FOV with a desired shape and/or aspect ratio. For example, in the case of 2D medical images, a square-shaped or a rectangular-shape extent may be preferred. Similarly, a 1:1, 3:2, 4:3 or 16:9 aspect ratio may be preferred. In the case of 3D medical images, a cube-shaped or a rectangular-prism-shaped extent may be preferred. Likewise, the cube-shaped or the rectangular-prism-shaped extent may preferably have one the above aspect ratios in a cross-section of a volumetric second FOV and an arbitrary depth. In other examples, in the case of 2D medical images, a cone-shaped or a truncated cone-shaped extent may be preferred. In such examples, the aperture angle of the cone (or the truncated cone) may preferably be a value selected from the range from about 30° to about 90°, and more preferably from about 45° to about 60°. Similarly, in the case of 3D medical images, an extent having a cross-section, or even two perpendicular cross-sections, being cone-shaped or truncated cone-shaped may be preferred. In such examples, the above ranges of angles are preferred for the aperture angles of the cross-section(s).

A modified medical image having an extent of a predetermined shape and/or aspect ratio may be advantageous to facilitate an efficient processing by a segmentation algorithm and/or another image processing algorithm to be applied on the modified medical image before or after the segmentation.

In some of such embodiments, prior or after applying the inpainting function to synthesize additional image data for the pixels or voxels located in the target region, the method may further comprise padding with pixels or voxels of a predetermined value, such as for instance zero (i.e., zero padding), a complementary region outside the region corresponding to the first FOV and the extent of the target region, such that the modified medical image has a second FOV with a desired shape and/or aspect ratio. In other words, the second FOV is equal to the sum of the first FOV, the extent of the target region and the extent of the complementary region. In this way, the pixels or voxels of the modified medical image can be generated with minimal computational overhead

Alternatively, in other embodiments, the inpainting function may synthesize additional image data for the pixels or voxels located in both the target region and the complementary region. In this way, it is possible to generate additional image data associated not only with the anatomical structure, but also with other anatomical features or tissue. This may be advantageous to obtain a modified medical image with a more realistic appearance for subsequent processing by an image processing algorithm and/or for user review.

The step of segmenting the anatomical structure may comprise processing the modified medical image with a model-based segmentation algorithm, a deep learning-based segmentation algorithm, or a combination thereof.

In some embodiments, the method may further comprise determining, based on the received medical image, one or more additional target regions in relation with the first portion of the anatomical structure, wherein each of the one or more additional target regions is a region expected to comprise a respective additional portion of the anatomical structure. Each of the one or more additional target regions may be located (i) completely within the first FOV, (ii) completely outside the first FOV, or (iii) partially within and partially outside the first FOV.

In these embodiments, the second FOV further comprises the one or more additional target regions. Thus, in the step of applying the inpainting function to the received medical image to generate the modified medical image, the inpainting function will also generate image content in each of the one or more additional target regions. In this way, the segmentation of the anatomical structure will be carried out on the basis of a modified image which comprises a much more complete anatomical context.

In some embodiments, applying the inpainting function comprises inferring the value of pixels or voxels of the modified medical image in a region outside the first FOV, but within the second FOV, based on the value of pixels or voxels of the received medical image. This advantageously leverages the own contents of the original image data to generate additional image data. The value of a first pixel or voxel located outside the first FOV may be inferred from the values of a plurality of pixels or voxels of the received medical image which are located in a neighborhood of said first pixel or voxel. Moreover, for pixels or voxels that are located further away from the first FOV, their value may be inferred also based on the inferred values of other pixels or voxels located outside the first FOV.

In some of these embodiments, applying the inpainting function may preferably comprise setting the value of pixels or voxels of the modified medical image in a region within the first FOV to values of corresponding pixels or voxels of the received medical image. In this way, the original image data contained in the received medical image is not modified by the inpainting function and can be fully relied upon for diagnostic or treatment purposes.

However, in some other embodiments the inpainting function may additionally be used to repair a damaged or missing region of the received medical image. In such embodiments, the method may further comprise determining, based on the received medical image, a damaged region located within the first FOV. The damaged region may be a region having low image quality (e.g., a contrast, or a signal-to-noise ratio, below a predefined threshold) or affected by an image artifact. In such embodiments, applying the inpainting function further comprises inferring the value of pixels or voxels of the modified medical image in said damaged region based on the value of pixels or voxels of the received medical image which are not in the damage region.

In one of such embodiments, the damaged region may comprise at least a part of an implanted device or an interventional device, such as a ballon, a stent or a mitraclip, which may obscure or obstruct the first portion of the anatomical structure and, as a result, perturb the segmentation of the anatomical structure. In such cases, the inpainting function may generate the modified medical image in which said implanted device or interventional device (or part thereof) has been advantageously removed.

In some embodiments, the inpainting function is a rule-based or analytical algorithm. In such embodiments, the rule-based or analytical algorithm may preferably comprise a diffusion-based inpainting algorithm, a texture synthesis algorithm, an exemplar-based inpainting algorithm, a hierarchical super-resolution based inpainting algorithm and/or a spatial patch blending inpainting algorithm.

Alternatively, in other embodiments, the inpainting function is a trained inpainting function comprising an artificial intelligence algorithm. The inventors have recognized that generative artificial intelligence algorithms are very suitable for image processing tasks and, in particular, for inpainting.

In some of these embodiments, the artificial intelligence algorithm may preferably comprise at least one of: a generative adversarial network, GAN; a variational autoencoder, VAE; an encoder/decoder network with a spatial discounted loss function; and normalizing flows. The use of these types of generative artificial intelligence algorithms for inpainting can advantageously lead to very exact results.

In some embodiments, the received medical image is a three dimensional, 3D, medical image, the trained inpainting function preferably comprises a 3D neural network, and applying the inpainting function to the received medical image to generate the modified medical image preferably comprises processing the 3D medical image using the 3D neural network. The use of a 3D neural network is a particularly advantageous way to implement inpainting on 3D medical images because the full 3D context of the anatomical structure and other anatomical features contained in the 3D medical image can be taken into account, enabling a consistent prediction over the entire volume of the 3D medical image. In particular, the 3D neural network may preferably be a 3D convolutional neural network. Using 3D convolutions within the 3D medical image is a powerful way to take into account the full 3D context of the anatomical structure and other anatomical features.

In an alternative embodiment, instead of a 3D neural network, the trained inpainting function comprises a 2D neural network. In such embodiment, applying the inpainting function to the received medical image preferably comprises processing the 3D medical image as a plurality of 2D slices using the 2D neural network. Compared to the embodiment using a 3D neural network, this alternative embodiment may yield inferior results because it processes each 2D slice separately without taking into account information from neighboring 2D slices, which may lead to inconsistencies when stacking a plurality of corresponding modified 2D slices to form a modified 3D medical image. However, this embodiment is much less computationally intensive, and may be preferred when computing resources are limited.

Parameters of the trained inpainting function can be adapted by means of training. In particular, supervised training, semi-supervised training, unsupervised training, reinforcement learning and/or active learning can be used. In particular, the parameters of the trained inpainting function can be adapted iteratively by several steps of training.

Preferably, in some embodiments, the trained inpainting function has been trained, using a training dataset, to inpaint a region outside the FOV of a medical image comprising an anatomical structure of a given class of anatomical structures to generate a modified medical image having a lager FOV, wherein the training dataset comprises a plurality of triplets, each triplet comprising:
- an input medical image having an extent defining a FOV and comprising a portion of an anatomical structure of said given class of anatomical structures;
- a mask indicative of a region located outside the FOV of the input medical image and in which a different portion of the anatomical structure is comprised; and
- an output medical image having an extent defining a FOV larger than, and including, the FOV of the input medical image, the output medical image comprising both portions of the anatomical structure.

That is, during training, the trained inpainting function is successively provided at its input with the input medical images and their respective masks of the training dataset to learn how to produce at its output modified medical images that approximate the respective output medical images of the training dataset, which are used as ground truth.

In some embodiments, the method may further comprise: receiving metadata relative to the received medical image, to the anatomical structure and/or to the subject; and providing the metadata to the inpainting function, wherein applying the inpainting function to the received medical image comprises generating the modified medical image further based on the metadata. The use of such metadata, i.e., other available non-image information, makes it possible for the trained inpainting function to generate a better prediction of the contents of the modified medical image in the region outside the first FOV. In particular, this metadata can be used both during the training phase and the inference/application phase, such that the trained inpainting function can learn how to use the metadata to improve its predictions. In some examples, the metadata may be encoded, e.g., as a separate input channel and passed to the trained inpainting function.

In some of these embodiments, the metadata may preferably comprise information relative to an imaging protocol carried out to acquire the received medical image and/or patient demographics. The inventors have recognized that this type of non-image information is highly complementary to image data contained in the original medical image, and advantageously assists the trained inpainting function in generating additional image data for the modified medical image.

In some embodiments, segmenting the anatomical structure may be further based on the received medical image and comprises using a model-based segmentation algorithm. In this way, the segmentation algorithm, such as a model-based segmentation algorithm, may advantageously use or process the image data of the modified medical image and that of the received medical image in different ways and/or different stages of the segmentation process.

The segmenting of the anatomical structure being further based on the received medical image may preferably refer to the fact that the modified medical image and the received medical image are both provided to a segmentation algorithm. However, in the case that the modified medical image within the first FOV coincides with received medical image, it may be sufficient to provide the modified medical image to the segmentation algorithm, because the received medical image is already included within.

In one of such embodiments, segmenting the anatomical structure using the model-based segmentation may preferably comprise: determining an initial placement of a segmentation model onto the anatomical structure based on the modified medical image; and deforming the initially-placed segmentation model to adapt it to the anatomical structure based on the received medical image. In this way, during a stage of initial pose estimation, also referred to as the shape finding phase, the model-based segmentation algorithm may advantageously benefit from the relatively larger FOV of the modified medical image to have more anatomical context for determining the initial placement of the segmentation model onto the first and second portions of the anatomical structure, reducing the risk of a shift error or a rotation error of the segmentation results. Then, during a subsequent deformable adaptation phase, the model-based segmentation algorithm may focus instead on the received medical image (i.e., on the image data contained within the first FOV) to deform the initially-placed segmentation model in order to adapt it to the first portion of the anatomical structure. In other words, the model-based segmentation algorithm relies only on the true image data of the received medical image, and not on the synthesized additional image data outside the first FOV, to deform the segmentation model. Thus, by varying the focus of attention of the model-based segmentation algorithm from the modified medical image, during the shape finding phase, to the received medical image, during the deformable adaptation phase, this embodiment not only makes the segmentation process more robust to shift and rotation errors, but also reduces the risk that the adaptation of the segmentation model is dominated by the synthesized image data over the true image data.

In some embodiments, the method may further comprise: displaying the modified medical image on a screen display, wherein a visualization setting for a region of the modified medical image that is outside the first FOV is different from the visualization setting for a region of the modified medical image that is within the first FOV.

In this way, the modified medical image is not only used for segmentation and possibly other image processing purposes, but also for visualization on a screen display. In order to avoid misleading the user, one or more visualization settings for the region of the modified medical image that is within the first FOV are set differently from that or those for the region that is outside the first FOV (but within the second FOV), so that it is apparent to the user which image data belongs to the original medical image (and, hence, comes from an actual acquisition using a medical image acquisition unit) and which image data has been synthetically generated by means of the inpainting function. Even if the inpainted image data may not, or should not, be relied upon for diagnosis or treatment decisions, it may still provide the user with more anatomical context when assessing the first portion of the anatomical structure, which in turn facilitates drawing conclusions from the original medical image.

In such embodiments, the visualization setting may preferably be at least one of: a transparency setting, a color coding, or a highlighting of the outline of a region (e.g., by means of colored contour line). It has been found that these visualization settings are particularly effective to distinguish between the real image data (i.e., the image data contained in the received medical image) and the inpainted image data.

According to examples in accordance with another aspect of the present invention, there is provided a computer program product comprising computer program code means which, when executed on a processor, cause the processor to perform the steps of any of the methods disclosed herein. The computer program product may be in any code, in particular a code suited for image-based automatic inspection and analysis applications, in particular for measurement and quantification purposes of features of anatomical structures in medical images.

According to examples in accordance with yet another aspect of the present invention, there is provided a processing system for segmenting an anatomical structure in a medical image. The processing system comprises a processor configured to: receive a medical image, the medical image having an extent that defines a first field of view, FOV, wherein the medical image comprises a first portion of an anatomical structure of a subject; determine, based on the received medical image, a target region in relation with the first portion of the anatomical structure, the target region being located outside the first FOV, wherein the target region is a region expected to comprise a second portion of the anatomical structure; apply an inpainting function to the received medical image to generate a modified medical image, wherein the modified medical image has an extent that defines a second FOV, wherein the second FOV includes, and is larger than, the first FOV and comprises the target region; and segment the anatomical structure based on the modified medical image.

The processor of the processing system may be further configured to perform the additional steps of any of the methods disclosed herein.

There is also provided a medical diagnostic imaging system, comprising: the processing system described above; and a medical image acquisition unit operably coupled to the processing system and configured to acquire the medical image.

In a preferred embodiment, the medical diagnostic imaging system is an ultrasound imaging system.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an example of a medical image in which the segmentation of an anatomical structure exhibits a shift error;
Fig. 2 illustrates an example of a medical image in which the segmentation of an anatomical structure exhibits a rotation error;
Fig. 3 illustrates a flowchart of method for segmenting an anatomical structure in a medical image according to a proposed embodiment;
Figs. 4a-c illustrate an example of the processing of a medical image using the method of Fig. 3: Fig. 4a depicts a medical image with a relatively small FOV; Fig. 4b depicts the medical image together with a target region to be inpainted using an inpainting function; and Fig. 4c depicts a modified medical image with an enlarged FOV after applying the inpainting function to the medical image of Fig. 4a;
Fig. 5 illustrates an example of a trained inpainting function suitable for a method or a processing system for segmenting an anatomical structure in a medical image according to a proposed embodiment;
Figs. 6a-d illustrate an exemplary set of 2D slices obtained from a 3D ultrasound medical image which are suitable for a training dataset for training a trained inpainting function;
Fig. 7 illustrates some examples of modified medical images generated during the training phase of the trained inpainting function of Fig. 5;
Fig. 8 illustrates a simplified block diagram of a processing system for segmenting an anatomical structure in a medical image according to a proposed embodiment;
Fig. 9 illustrates a simplified block diagram of a medical diagnostic imaging system according to a proposed embodiment; and
Fig. 10 illustrates an example of a computer within which one or more parts of an embodiment may be employed.

### DETAILED DESCRIPTION OF THE EMBODIMENTS

The invention will be described with reference to the figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the figures are merely schematic and are not drawn to scale. It should also be understood that the same reference numerals are used throughout the figures to indicate the same or similar parts.

The invention provides a computer-implemented method and a processing system for segmenting an anatomical structure in a medical image. A medical image having an extent that defines a first FOV and comprising a first portion of an anatomical structure of a subject is received. Based on the received medical image, a target region in relation with the first portion of the anatomical structure is determined, wherein the target region is located outside the first FOV and is a region expected to comprise a second portion of the anatomical structure. An inpainting function is applied to the received medical image to generate a modified medical image having an extent that defines a second FOV, wherein the second FOV includes, and is larger than, the first FOV and comprises the target region. The anatomical structure is then segmented based on the modified medical image.

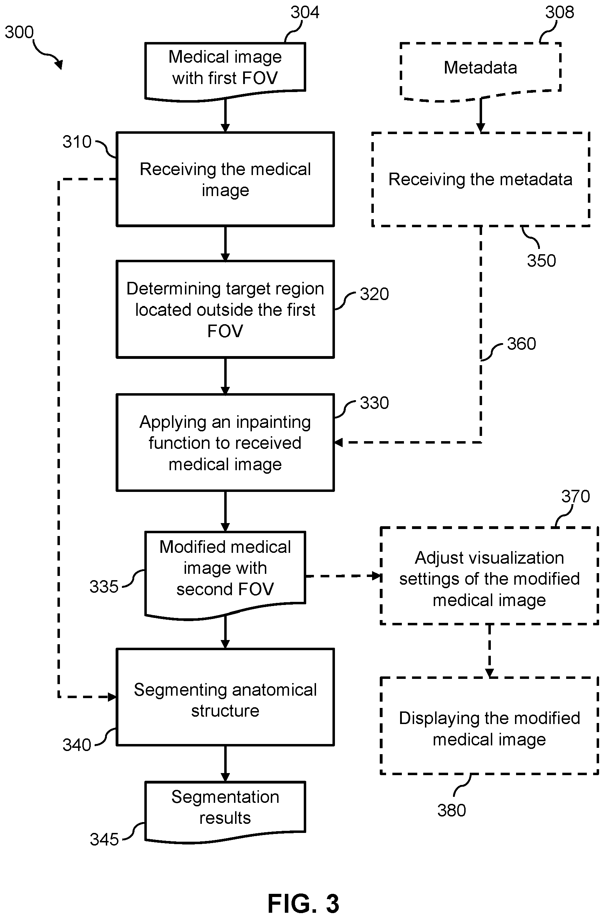

Referring now to Fig. 3, there is depicted a simplified flow diagram of a method 300 for segmenting an anatomical structure in a medical image according to a proposed embodiment. In particular, the method 300 is a computer-implemented method.

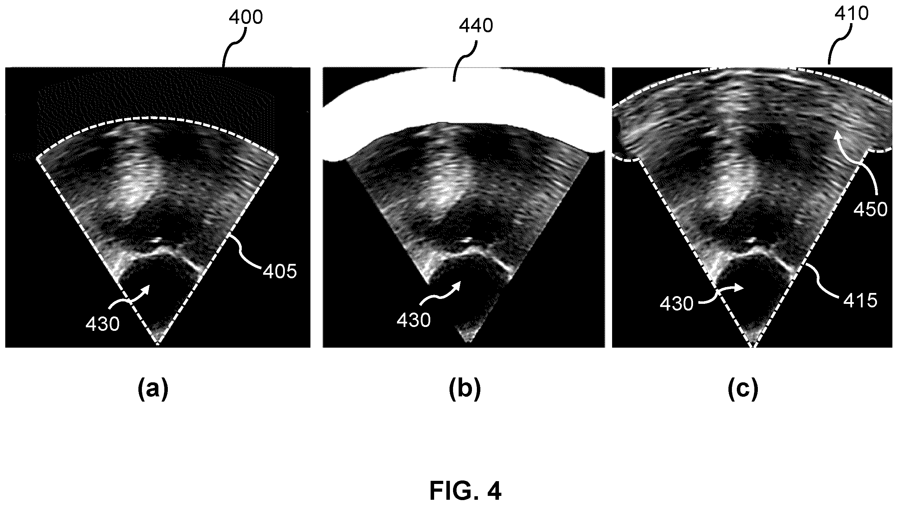

To better illustrate the processing performed by the method 300, its steps will bedescribed with reference to Figs. 4a-c, in which an exemplary cardiac ultrasound medical image 400 with a relatively small FOV 405 is processed in accordance with the method 300 to obtain a modified medical image 410 with an enlarged FOV 415. Although the example in Figs. 4a-c corresponds to 2D medical image, it will be apparent to the skilled person that the method 300 could readily be applied to a 3D medical image as well.

The method 300 begins with the step 310 of receiving a medical image 304 which comprises a first portion of an anatomical structure of a subject. The medical image 304 has an extent that defines a first FOV. The medical image 304 can be for example the ultrasound medical image 400 shown in Fig. 4a, which has a truncated cone-shaped extent, as delimited by the dotted white contour in Fig. 4a, that defines a first FOV 405. Due to its relatively small first FOV 405, the ultrasound medical image 400 only comprises a first portion 430 of a heart of the subject, which include, in particular, a mitral valve, a left ventricle and parts of a right ventricle, as it can be observed in Fig. 4a.

Step 320 comprises determining, based on the received medical image 304, a target region in relation with the first portion of the anatomical structure, in which a second portion of the anatomical structure is expected to be comprised. Importantly, the target region is located outside the first FOV.

This step 320 is further illustrated in the example shown in Fig. 4b, in which a target region 440, designated by a white mask in Fig. 4b, has been determined based on the anatomical information contained in the received ultrasound medical image 400. The target region 440 is located at the far end of the truncated cone-shaped extent of the ultrasound medical image 400, clearly outside the first FOV 405. The specific location of the target region 440 relative to the first portion 430 has been selected because it is there where the rest of the left ventricle is expected to be located.

Next, the method 300 proceeds to step 330, which comprises applying an inpainting function to the received medical image 304 to generate a modified medical image 335. The modified medical image 335 has an extent that defines a second FOV, which (i) includes, and is larger than, the first FOV, and (ii) comprises the target region.

Step 330 is further illustrated in the example of Fig. 4c, in which a modified ultrasound medical image 410 has been generated by means of an inpainting function based on the received ultrasound medical image 400 and the mask defining the target region 440. The extent of the modified ultrasound medical image 410, as delimited by the dotted white contour in Fig. 4c, defines a second FOV 415 that is larger than the first FOV 405 and includes both the first FOV 405 and the target region 440.

In the specific example of Figs. 4a-c, the second FOV 415 is equal to the sum of the first FOV 405 and the extent of the target region 440, which results in the second FOV 415 no longer being truncated cone-shaped. However, the inpainting function could have additionally generated image data on each of the regions adjacent to the two straight sides of the first FOV 405, such that the second FOV 415 is also truncated cone-shaped, but with a larger aperture angle. This would have led to the second FOV being larger than the sum of the first FOV 405 and the extent of the target region 440.

In step 330, the inpainting function infers the value of pixels or voxels of the modified medical image 335 in a region outside the first FOV, but within the second FOV, based on the value of pixels or voxels of the received medical image 304. In the example of Fig. 4, the region 450 of the modified ultrasound medical image has been inpainted by inferring the value of pixels for the target region 440 based on the values of pixels within the first FOV 405 of the received ultrasound medical image 400.

Moreover, in this particular example, the inpainting function has set the value of pixels of the modified ultrasound medical image 410 in the region within the first FOV 405 to be the same as the value of corresponding pixels or voxels of the received ultrasound medical image 400.

In the example of Figs. 4a-c, the inpainting function used to implement the method step 330 is a trained inpainting function comprising an artificial intelligence algorithm which will be further described below. However, an inpainting function comprising a rule-based or analytical algorithm could have been used instead.

After the modified medical image 335 has been generated, the method 300 proceeds to step 340, which comprises segmenting the anatomical structure based on the modified medical image 335, such that segmentation results 345 can be obtained more reliably because of the additional anatomical context contained in the relatively larger second FOV.

The method 300 may optionally comprise step 350, which comprises receiving metadata 308 relative to the received medical image 304, to the anatomical structure and/or to the subject. For example, the metadata 308 may comprise information relative to an imaging protocol carried out to acquire the received medical image 304, patient demographics and/or other available non-image information. In this case, the method 300 further comprises step 360, in which the metadata 308 is provided to the inpainting function, such that at step 330 the modified medical image 335 can be generated based on not only the received medical image 304, but also the metadata 308.

Also optionally, the method 300 may comprise providing the received medical image 304 to a segmentation algorithm used in step 340 for segmenting the anatomical structure, so that the segmentation is based on both the received medical image 304 and the modified medical image 335. It is noted that, if the modified medical image 335 within the first FOV coincides with received medical image 304 (as it is the case in the illustrative example of Figs. 4a-c), it may be sufficient to provide the modified image data 335 to the segmentation algorithm, without requiring any additional step.

The segmentation algorithm may preferably be a model-based segmentation algorithm, in which case step 340 may comprise determining an initial placement of a segmentation model onto the anatomical structure based on the modified medical image 335, and then deforming the initially-placed segmentation model to adapt it to the anatomical structure based on the received medical image 304.

The modified medical image 335 may be used not only for segmentation purposes, but also for visualization on a screen display. In such case, the method 300 further comprises the optional step 370, which comprises adjusting the visualization settings of the modified medical image 335 (such as, for example, a transparency setting, a color coding, or a highlighting of the outline of a region), so that a visualization setting for a region that is outside the first FOV is different from the visualization setting for a region that is within the first FOV. Then, additional optional step 380 comprises displaying the modified medical image 335, with the visualization settings so adjusted, on a screen display.

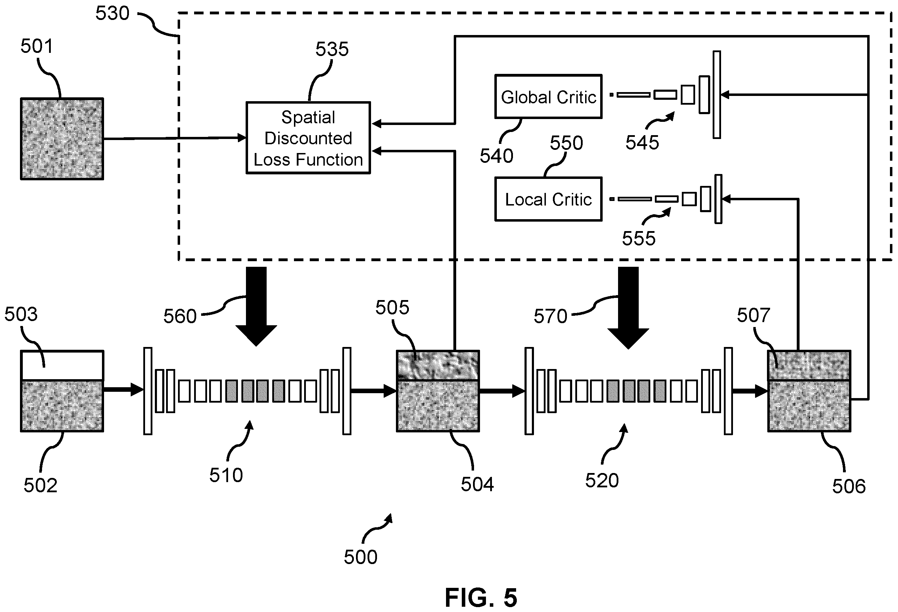

Referring now to Fig. 5, there is depicted an example of a trained inpainting function 500 comprising an artificial intelligence algorithm suitable for the implementation of step 330 of the method 300 described above.

The artificial intelligence algorithm is a feedforward fully convolutional neural network which is capable of inpainting medical images having one or more missing regions at arbitrary locations and with variable sizes. In particular, Fig. 5 largely reproduces a corresponding figure of conference proceedings "Generative Image Inpainting with Contextual Attention", by J. Yu, et al., 2018 IEEE/CVF Conference on Computer Vision and Pattern Recognition (CVPR), Salt Lake City, UT, USA, 2018 pp. 5505-5514, arXiv: 1801.07892, which describes the architecture, training and operation of such type of neural network. The content of this document is hereby incorporated by reference.

The artificial intelligence algorithm has a two-stage coarse-to-fine network architecture. A first convolutional neural network 510 takes as input a medical image 502 with a missing region indicated by a mask 503 and generates an initial prediction 504 of the complete medical image, in which the mask 503 has been filled in with a coarse estimate 505 of the missing image data. Then, a second convolutional neural network 520 takes as input the initial prediction 504 and generates a final prediction 506 of the complete medical image, in which the coarse estimate 505 is replaced by a refined estimate 507.

The artificial intelligence algorithm further comprises a training module 530 configured to train the whole network end to end on how to make the predictions. During the training phase, the first and second convolutional neural networks 510, 520 are trained using a training dataset. The training dataset comprises a plurality of triplets, wherein each triplet comprises an input medical image (such as medical image 502) having an extent defining a FOV and comprising a portion of an anatomical structure of a given class of anatomical structures, and a mask (such as mask 503) indicative of a region located outside the FOV of the input medical image and in which a different portion of the anatomical structure is comprised. The input medical image and the mask are both provided as input to the first convolutional neural network 510. Moreover, each triplet further comprises an output medical image having an extent defining a FOV larger than, and including, the FOV of the input medical image, the output medical image comprising both portions of the anatomical structure. The output medical image, such as original (or ground truth) medical image 501, is provided to the training module 530.

The training module 530 comprises a spatial discounted loss function 535 to compute a reconstruction loss between a prediction 504, 506 of the complete medical image and the original medical image 501. The spatial discounted loss function 535 uses a weight mask, in which the weight of each pixel in the weight mask is discounted depending on the distance of said pixel to a nearest not-inpainted pixel.

The first convolutional neural network 510 is exclusively trained with the spatial discounted loss function 535 to minimize the reconstruction loss, so that this network learns how to rough out the missing image data. During the training phase, the training module 530 updates the parameters 560 (e.g., network weights) of the first convolutional neural network 510.

The training module 530 further comprises a global critic cost function 540 implemented with a first GAN 545, and a local critic cost function 550 implemented with a second GAN 555, with which two Wasserstein GAN (WGAN) losses can be computed respectively for the global and local outputs of the second convolutional neural network 520.

Therefore, the second convolutional neural network 520 is not only trained with the spatial discounted loss function 535 to minimize the reconstruction loss between the final prediction 506 of a complete medical image and the original medical image 501, but also with the global and local critic cost functions 540, 550. The global critic cost function 540 looks at the global final prediction 506, while the local critic cost function 550 looks only at the refined estimate 507 of the missing image data. This approach has proven to be very effective for stabilizing the training of the artificial intelligence algorithm because, while the reconstruction loss directly regresses missing pixels to the original medical image 501, the WGAN losses learn to match potentially correct images and provide adversarial supervision, enforcing global and local consistency of the final prediction 506 of the complete medical image.

Thus, during the training phase, the training module 530 also updates the parameters 570 of the second convolutional neural network 520. Intuitively, the second convolutional neural network 520 sees a more complete scene than the input medical image 502, which has a missing region, so this network can learn a better feature representation than the first convolutional neural network 510.

It will be apparent to the skilled person that the trained inpainting function 500 can be equally applied to 2D medical images and 3D medical images. Thus, even though some reference has been made to "pixel(s)" in the above description, suggesting that a 2D medical image is being processed, this term could be replaced by "voxel(s)" when processing 3D medical images.

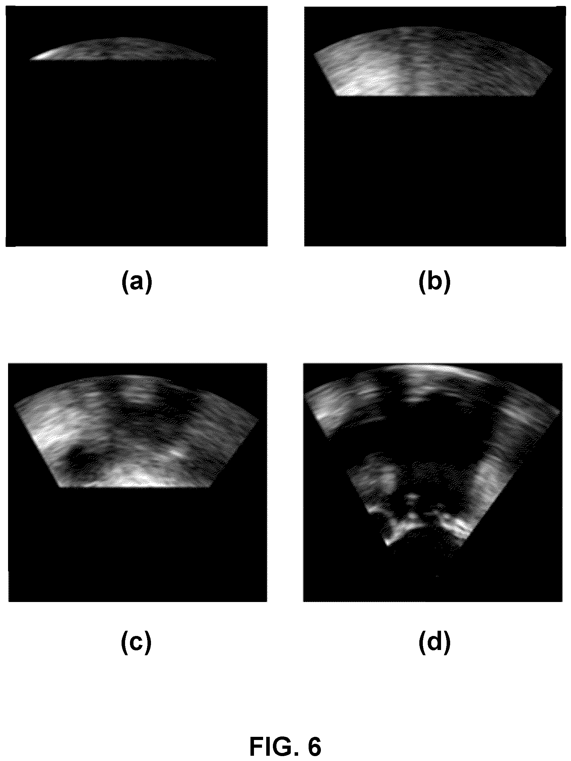

Figs. 6a-d presents a plurality of 2D slices obtained from a 3D ultrasound medical image which are suitable for a training dataset for training a trained inpainting function comprising a 2D neural network. In this way, the 2D neural network can be trained by processing the plurality of 2D slices sequentially.

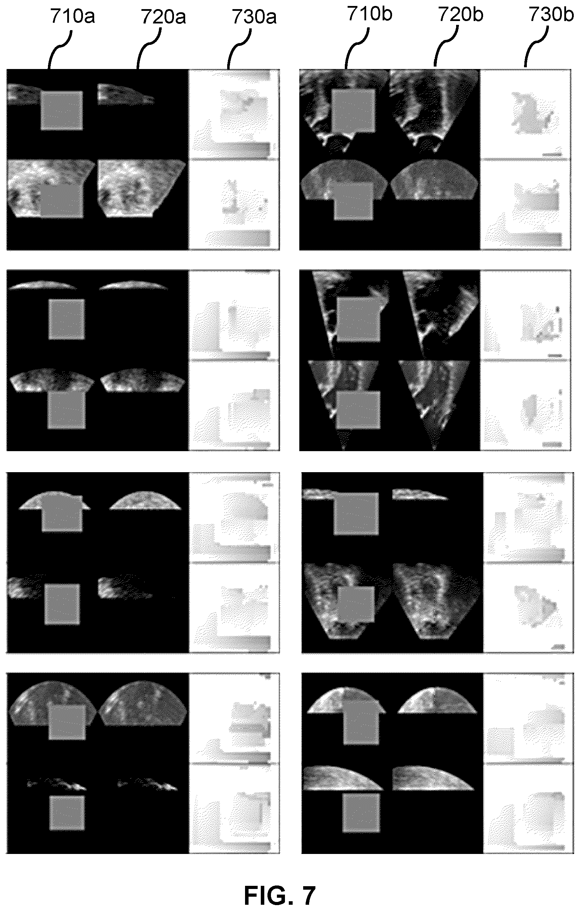

Fig. 7 depicts some examples of modified medical images generated during the training phase of the trained inpainting function 500.

Several input medical images are provided in columns 710a and 710b. Each input medical image has an extent defining a FOV and is provided with a respective mask that is indicative of a region that needs to be inpainted. The trained inpainting function 500 processes the input medical images to generate a prediction of the complete medical images, shown in columns 720a and 720b, by filling the missing regions with anatomically plausible content.

Columns 730a and 730b represent an attention map that assists in visualizing for each pixel of the modified medical image the location of the most interesting group of pixels in the input medical image for the trained inpainting function 500 to predict said pixel of the modified medical image. The attention map uses a color coding in which, for example, white (e.g., the center of a color coding range) may mean that a pixel attends on itself, pink (e.g., at one end of the color coding range) may mean that the pixel attends on pixels located towards the bottom/left, and green (e.g., at the other end of the color coding range) may mean that the pixel attends on pixels located towards the top/right.

The skilled person would be readily capable of developing a processing system for carrying out any method described herein. Thus, each step of a flowchart may represent a different action performed by a processing system and may be performed by a respective module of the processing system.

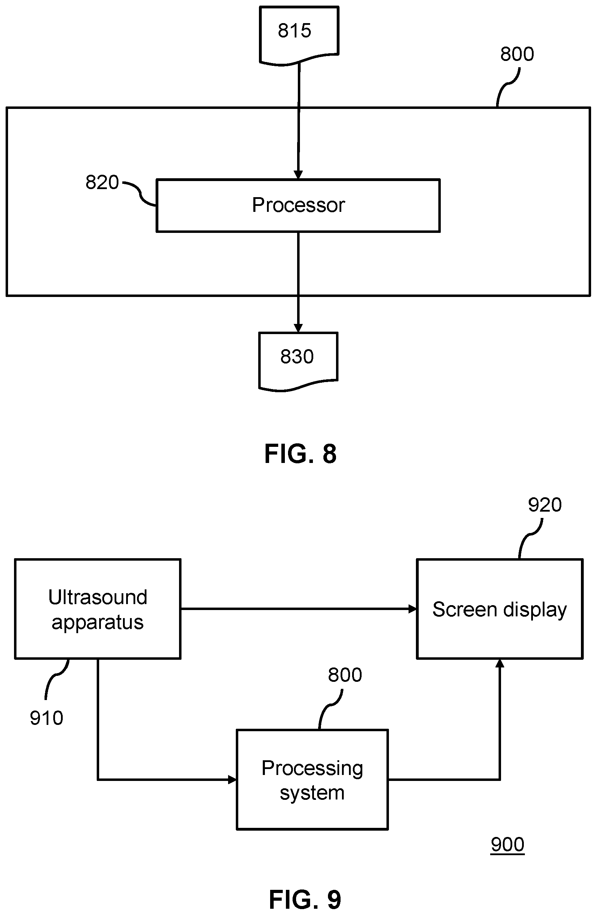

Referring now to Fig. 8, there is depicted a processing system 800 for segmenting an anatomical structure in a medical image according to a proposed embodiment. The processing system 800 comprises a processor 820.

The processing system 800 is configured to segment an anatomical structure by processing inputs 815. The inputs 815 comprise a medical image, which has an extent that defines a first FOV, and which comprises a first portion of an anatomical structure of a subject. The processor 820 is configured to determine, based on the received medical image, a target region in relation with the first portion of the anatomical structure. The target region is located outside the first FOV and is a region expected to comprise a second portion of the anatomical structure. The processor 820 is then configured to apply an inpainting function to the received medical image to generate a modified medical image having an extent that defines a second FOV. The second FOV includes, and is larger than, the first FOV and comprises the target region. The processor 820 is further configured to segment the anatomical structure based on the modified medical image in order to determine an output 830. The output 830 comprises segmentation results for the anatomical structure in the received medical image.

In some embodiments, the inputs 815 further comprise metadata relative to the received medical image, to the anatomical structure and/or to the subject. In these embodiments, the processor 820 is further configured to provide the metadata to the inpainting function, such that the modified medical image is generated based not only on the received medical image, but also on the metadata.

In some embodiments, the processing system 800 can further include an input interface (not shown) which is configured, for example, to receive user input indicative of an expected location of the second portion of the anatomical structure.

Turning now to Fig. 9, there is provided an illustrative example of a medical diagnostic imaging system 900, in particular, an ultrasound imaging system, in accordance with a proposed embodiment. The medical diagnostic imaging system 900 comprises an ultrasound apparatus 910, which includes a medical image acquisition unit configured to acquire ultrasound medical images, and a screen display 920, operably coupled to the ultrasound apparatus 910 and configured to display the ultrasound medical images. The medical diagnostic imaging system 900 further comprises the processing system 800 described above, which is operably coupled to the ultrasound apparatus 910 and the screen display 920. The processing system 800 is adapted to process ultrasound medical images acquired by the ultrasound apparatus 910 to obtain segmentation results for an anatomical structure comprised therein. The segmentation results can then be displayed on the screen display 920, for example, as an overlay on the respective ultrasound medical images.

It will be understood that the disclosed methods are computer-implemented methods. As such, there is also proposed a concept of a computer program product comprising computer program code means for implementing any described method when said computer program product is run on a processor.

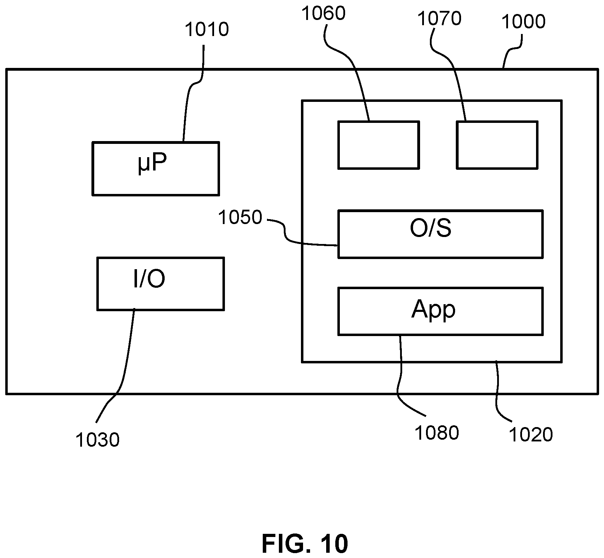

Fig. 10 illustrates an example of a computer 1000 within which one or more parts of an embodiment may be implemented. Various operations discussed above may utilize the capabilities of the computer 1000. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor-based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 1000 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, maybe buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program product for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method of Fig. 3, and the system of Figs. 8 and 9, may be implemented in hardware or software, or a mixture of both (for example, as firmware running on a hardware device). To the extent that an embodiment is implemented partly or wholly in software, the functional steps illustrated in the process flowchart may be performed by suitably programmed physical computing devices, such as one or more central processing units (CPUs) or graphics processing units (GPUs). Each process -and its individual component steps as illustrated in the flowchart- may be performed by the same or different computing devices. According to embodiments, a computer-readable storage medium stores a computer program comprising computer program code means configured to cause one or more physical computing devices to carry out a method for segmenting an anatomical structure in a medical image as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 8 and 9 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program product is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

Variations to the disclosed embodiments can be understood and effected by those skilled in the art in practicing the claimed invention, from a study of the drawings, the disclosure and the appended claims. Any reference signs in the claims should not be construed as limiting the scope. In the claims, the word "comprising" does not exclude other elements or steps, and the indefinite article "a" or "an" does not exclude a plurality.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

## Claims

1. A computer-implemented method (300) for segmenting an anatomical structure in a medical image (304, 400), the computer-implemented method comprising:
receiving (310) a medical image (304, 400), the medical image having an extent that defines a first field of view (405), FOV, wherein the medical image comprises a first portion (430) of an anatomical structure of a subject;
determining (320), based on the received medical image (304, 400), a target region (440) in relation with the first portion (430) of the anatomical structure, the target region being located outside the first FOV (405), wherein the target region is a region expected to comprise a second portion of the anatomical structure;
applying (330) an inpainting function (500) to the received medical image (304, 400) to generate a modified medical image (335, 410), wherein the modified medical image has an extent that defines a second FOV (415), wherein the second FOV includes, and is larger than, the first FOV (405) and comprises the target region (440); and
segmenting (340) the anatomical structure based on the modified medical image (335, 410).

2. The computer-implemented method (300) according to claim 1, wherein applying (330) the inpainting function comprises inferring the value of pixels or voxels of the modified medical image (335, 410) in a region outside the first FOV (405), but within the second FOV (415), based on the value of pixels or voxels of the received medical image (304, 400).

3. The computer-implemented method (300) according to claim 2, wherein applying (330) the inpainting function comprises setting the value of pixels or voxels of the modified medical image (335, 410) in a region within the first FOV (405) to values of corresponding pixels or voxels of the received medical image (304, 400).

4. The computer-implemented method (300) according to any of the preceding claims, wherein the inpainting function is a trained inpainting function (500) comprising an artificial intelligence algorithm.

5. The computer-implemented method (300) according to claim 4, wherein the artificial intelligence algorithm comprises at least one of: a generative adversarial network, GAN; a variational autoencoder, VAE; an encoder/decoder network with a spatial discounted loss function; and normalizing flows.

6. The computer-implemented method (300) according to claim 4 or 5, wherein the received medical image (304) is a three dimensional, 3D, medical image, wherein the trained inpainting function (500) comprises a 3D neural network, and wherein applying (330) the inpainting function to the received medical image (304) to generate the modified medical image (335) comprises processing the 3D medical image using the 3D neural network.

7. The computer-implemented method (300) according to any of claims 4 to 6, wherein the trained inpainting function (500) has been trained, using a training dataset, to inpaint a region outside the FOV of a medical image (304) comprising an anatomical structure of a given class of anatomical structures to generate a modified medical image (335) having a lager FOV,
wherein the training dataset comprises a plurality of triplets, each triplet comprising:
- an input medical image (502) having an extent defining a FOV and comprising a portion of an anatomical structure of said given class of anatomical structures;
- a mask (503) indicative of a region located outside the FOV of the input medical image (502) and in which a different portion of the anatomical structure is comprised; and
- an output medical image (501) having an extent defining a FOV larger than, and including, the FOV of the input medical image (502), the output medical image comprising both portions of the anatomical structure.

8. The computer-implemented method (300) according any of claims 4 to 7, further comprising:
receiving (350) metadata (308) relative to the received medical image (304), to the anatomical structure and/or to the subject; and
providing (360) the metadata to the inpainting function,
wherein applying (330) the inpainting function to the received medical image (304) comprises generating the modified medical image (335) further based on the metadata (308).

9. The computer-implemented method (300) according to claim 7, wherein the metadata (308) comprises information relative to an imaging protocol carried out to acquire the received medical image (304) and/or patient demographics.

10. The computer-implemented method (300) according to any of the preceding claims, wherein segmenting (340) the anatomical structure is further based on the received medical image (304, 400) and comprises using a model-based segmentation algorithm.

11. The computer-implemented method (300) according to claim 10, wherein segmenting (340) the anatomical structure using the model-based segmentation comprises:
determining an initial placement of a segmentation model onto the anatomical structure based on the modified medical image (335, 410); and
deforming the initially-placed segmentation model to adapt it to the anatomical structure based on the received medical image (304, 400).

12. The computer-implemented method (300) according to any of the preceding claims, further comprising:
displaying (380) the modified medical image (335, 410) on a screen display (920), wherein a visualization setting for a region of the modified medical image (335, 410) that is outside the first FOV (405) is different from the visualization setting for a region of the modified medical image (335,410) that is within the first FOV (405).

13. The computer-implemented method (300) according to claim 12, wherein the visualization setting is at least one of: a transparency setting, a color coding, or a highlighting of the outline of a region.

14. A computer program product (1080) comprising computer program code means which, when executed on a processor (1010), cause the processor to perform the steps of the method (300) according to any of claims 1 to 13.

15. A processing system (800) for segmenting an anatomical structure in a medical image (304, 400), the processing system comprising a processor (820) configured to:
receive (310) a medical image (304, 400), the medical image having an extent that defines a first field of view (405), FOV, wherein the medical image comprises a first portion of an anatomical structure of a subject;
determine (320), based on the received medical image (304, 400), a target region (440) in relation with the first portion (430) of the anatomical structure, the target region being located outside the first FOV (405), wherein the target region is a region expected to comprise a second portion of the anatomical structure;
apply (330) an inpainting function (500) to the received medical image (304, 400) to generate a modified medical image (335, 410), wherein the modified medical image has an extent that defines a second FOV (415), wherein the second FOV includes, and is larger than, the first FOV (405) and comprises the target region (440); and
segment (340) the anatomical structure based on the modified medical image (335, 410).
